# EUROPEAN PATENT APPLICATION

(11) **EP 1 830 298 A2**
(43) Date of publication of application: **05.09.2007**
(21) Application number: 07004243.7
(22) Date of filing: 01.03.2007
(51) Int. Cl.: G06F 21/00, H04L 9/00, H04M 1/725

(54) **Portable telephone and program for sending and receiving encrypted electronic mail**

(30) Priority: 02.03.2006 JP 2006056888
(71) Applicant: Aruze Corp., Tokyo 135-0063 (JP)
(72) Inventor: Sudo, Tomo, Tokyo 135-0063 (JP); Yoshida, Shuichiro, Tokyo 135-0063 (JP)
(74) Representative: HOFFMANN EITLE

(57) **Abstract**

A portable telephone comprises a nonvolatile memory, an operation unit, a liquid crystal panel and a microcomputer. The microcomputer is operable to: receive an encrypted electronic mail; store the received encrypted electronic mail in the nonvolatile memory: check whether or not a password input from the operation unit coincides with the password stored in the nonvolatile memory; decrypt the received encrypted electronic mail, with reference to the decryption table stored in the nonvolatlie memory, to generate a decrypted electronic mail, if the password accepted by the operation unit coincides with the password stored in the nonvolatile memory: store temporarily the decrypted electronic mail; control the display of the decrypted electronic mail temporarily stored in the microcomputer on the liquid crystal panel; and delete the decrypted electronic mail temporarily stored in the microcomputre according to an order for stopping displaying the decrypted electronic mail on the liquid crystal panel.

## Description

### BACKGROUND OF THE INVENTION

### 1. Field of the Invention

The present invention relates to a portable telephone that can send and receive an electronic mail and a program for sending and receiving the eletctronic mail.

### 2. Description of the Related Art

Recently, a critical document or a classified document is exchanged by using an electronic mail because of the development of information and communications technology. In this situation, it is important to check a person who sends or receives the electronic mail. Especially, when a person sends the electronic mail to a wrong person, he/she can not delete the sent electronic mail.

There is a mail server that relays an electronic mail sent from a mail client and signs the electronic mail digitally. This mail server is disclosed in Japanese Patent Laid-open Publication No.2001-168902. Further, there is a payroll accounting and payout processing system that executes payroll accounting by sending in-and-out information to a sever by using an encrypted electronic mail at an in-and-out time of each employee. This payroll accounting and payout processing system is disclosed in Japanese Patent Laid-open Publication No.2001-273389.

There is a remote control system that controls a device located at a point distant from a user by using an encrypted electronic mail. This remote control system is disclosed in Japanese Patent Laid-open Publication No.2002-058077. Further, there is a method for multiplexing an electronic mail address that allows a user to access an electronic mail which is sent to the user only when a pas sword input by the user coincides with his/her own password which is previously stored, in a situation that the electronic mail address which is previously stored is shared with a plurality of users. This method is disclosed in Japanese Patent Laid-open Publication No.H11-331242.

These inventions however have the following problems: (1) the first invention has a problem that there is no method for checking whether or not the electronic mail is sent from an authorized person, in a case where a malicious person impersonates the authorized person and sends an electronic mail by using a mail address of the authorized person; (2) the second and third inventions have a problem that a malicious person can know contents of the encrypted electronic mail if the malicious person operates a device (e.g. personal computer) receiving the encrypted electronic mail without permission, because the device automatically decrypts the encrypted electronic mail when receiving the encrypted electronic mail to which an regular mail address is attached; and (3) the fourth invention has a problem that a new specifying field (e.g. a source user specifying field and a destination user specifying field) to which a mail server refers in order to specify a source user and a destination user should be added to the electronic mail because the electronic mail address is shared with the plurality of users.

### SUMMARY OF THE INVENTION

It is an object of the present invention to provide a portable telephone and a program for sending and receiving an electronic mail which are capable of checking whether or not a received electronic mail is sent from an authorized person without adding a new specifying field to the electronic mail, and preventing a malicious person from reading the electronic mail even if the malicious person impersonates the authorized person.

In order to achieve the object, the present invention provides a portable telephone comprising: an encrypted electronic mail receiving means for receiving an encrypted electronic mail; an encrypted electronic mail storing means for storing the received encrypted electronic mail; a password storing means for storing a password; a password inputting means for inputting a password; a ckecing means for checking whether or not a password input from the password inputting means coincides with the password stored in the password storing means ; a decryption table storing means for storing a decryption table; a decrypted electronic mail generating means for decrypting the received encrypted electronic mail stored in the encrypted electronic mail storing means, with reference to the decryption table stored in the decryption table storing means, to generate a decrypted electronic mail, if the password input from the password inputting means coincides with the password stored in the password storing means; a decrypted electronic mail temporarily storing means for temporarily storing the decrypted electronic mail generated by the decrypted electronic mail generating means; a display means for displaying the decrypted electronic mail thereon; a display conrol means for controlling the display of the decrypted electronic mail temporarily stored in the decrypted electronic mail temporarily storing means on the display means; and a decrypted electronic mail deleting means for deleting the decrypted electronic mail temporarily stored in the decrypted electronic mail temporarily storing means according to an order for stopping displaying the decrypted electronic mail on the display means.

In order to achieve the object, the present invention provides a portable telephone comprising: an electronic mail storing means for storing a created electronic mail; an encryption table storing means for storing an encryption table: an encrypted electronic mail generating means for encrypting the electronic mail stored in the electronic mail storing means with reference to the encryption table stored in the encryption table storing means, to generate an encrypted electronic mail; an encrypted electronic mail sending means for sending the encrypted electronic mail generated by the encrypted electronic mail generating means; and a deleting means for deleting the electronic mail corresponding to the encrypted electronic mail from the electronic mail storing means after the encrypted electronic mail sending means sends the encypted electronic mail.

In order to achieve the object, the present invention provides a portable telephone usable medium having a portable telephone readable program code embodied therein for sending and receiving an electronic mail, the portable telephone readable program code comprising; a first portable telephone readable program code for causing the portable telephone to receive an encrypted electronic mail; a second portable telephone readable program code for causing the portable telephone to store the received encrypted electronic mail; a third portable telephone readable program code for causing the portable telephone to store a password; a fourth portable telephone readable program code for causing the portable telephone to input a password; a fifth portable telephone readable program code for causing the portable telephone to check whether or not a password input by the portable telephone coincides with the password stored in the portable telephone; a sixth portable telephone readable program code for causing the portable telephone to store a decryption table; a seventh portable telephone readable program code for causing the portable telephone to decrypt the received encrypted electronic mail with reference to the decryption table, to generate a decrypted electronic mail, if the password input by the portable telephone coincides with the password stored in the portable telephone; an eighth portable telephone readable program code for causing the portable telephone to temporarily store the decrypted electronic mail; a ninth portable telephone readable program code for causing the portable telephone to display the decrypted electronic mail; a tenth portable telephone readable program code for causing the portable telephone to control the display of the decrypted electronic mail; and an eleventh portable telephone readable program code for causing the portable telephone to delete the decrypted electronic mail according to an order for stopping displaying the decrypted electronic mail.

In order to achieve the object, the present invention provides a portable telephone usable medium having a portable telephone readable program code embodied therein for sending and receiving an electronic mail, the portable telephone readable program code comprising: a first portable telephone readable program code for causing the portable telephone to store a created electronic mail; a second portable telephone readable program code for causing the portable telephone to store an encryption table; a third portable telephone readable program code for causing the portable telephone to encrypt the electronic mail with reference to the encryption table, to generate an encrypted electronic mail; a fourth portable telephone readable program code for causing the portable telephone to send the encrypted electronic mail; and a fifth portable telephone readable program code for causing the portable telephone to delete the electronic mail corresponding to the encrypted electronic mail after sending the encypted electronic mail.

### BRIEF DESCRIPTION OF THE DRAWINGS

FIG.1 is a perspective view of a portable telephone according to an exemplary embodiment of the present invention.
FIG.2 is a block diagram of an internal configuration of the portable telephone shown in FIG.1.
FIG.3 is a block diagram of an inner configuration of a server according to the exemplary embodiment of the present invention.
FIG.4 is an explanatory diagram of encryption and decyryption tables (Katakana version) according to the exemplary embodiment of the present invention.
FIG. 5 is a flowchart of an encryption and decryption table receiving process executed in the portable telephone according to the exemplary embodiment of the present invention.
FIG.6 is an explanatory diagram showing an image displayed on a liquid crystal panel of the portable telephone on the basis of table selection information according to the exemplary embodiment of the present invention.
FIG.7 is a flowchart of an encrypted mail sending process executed in the portable telephone according to the exemplary embodiment of the present invention.
FIG.8 is an explanatory diagram showing an address book according to the exemplary embodiment of the present invention.
FIG.9A is an explanatory diagram showing an electronic mail (Katakana version) displayed on the liquid crystal panel of the portable telephone according to the exemplary embodiment of the present invention.
FIG.9B is an explanatory diagram showing an encrypted electronic mail after encrypting the electronic mail (Katakana version) according to the exemplary embodiment of the present invention.
FIG.10 is a flowchart of an encrypted mail decrypting process executed in the portable telephone according to the exemplary embodiment of the present invention.
FIG.11A is an explanatory diagram showing an encrypted electronic mail (Katakana version) displayed on the liquid crystal panel of the portable telephone according to the exemplary embodiment of the present invention.
FIG.11B is an explanatory diagram showing a decrypted electronic mail after decrypting the encrypted electronic mail (Katakana version) according to the exemplary embodiment of the present invention.
FIG.12 is an explanatory diagram of encryption and decyryption tables (Alphabet version) according to the exemplary embodiment of the present invention.
FIG.13A is an explanatory diagram showing an electronic mail (Alphabet version) displayed on the liquid crystal panel of the portable telephone according to the exemplary embodiment of the present invention.
FIG.13B is an explanatory diagram showing an encrypted electronic mail after encrypting the electronic mail (Alphabet version) according to the exemplary embodiment of the present invention.
FIG.14A is an explanatory diagram showing an encrypted electronic mail (Alphabet version) displayed on the liquid crystal panel of the portable telephone according to the exemplary embodiment of the present invention.
FIG. 14B is an explanatory diagram showing a decrypted electronic mail after decrypting the encrypted electronic mail (Alphabet version) according to the exemplary embodiment of the present invention.

### DESCRIPTION OF THE PREFERRED EMBODIMENTS

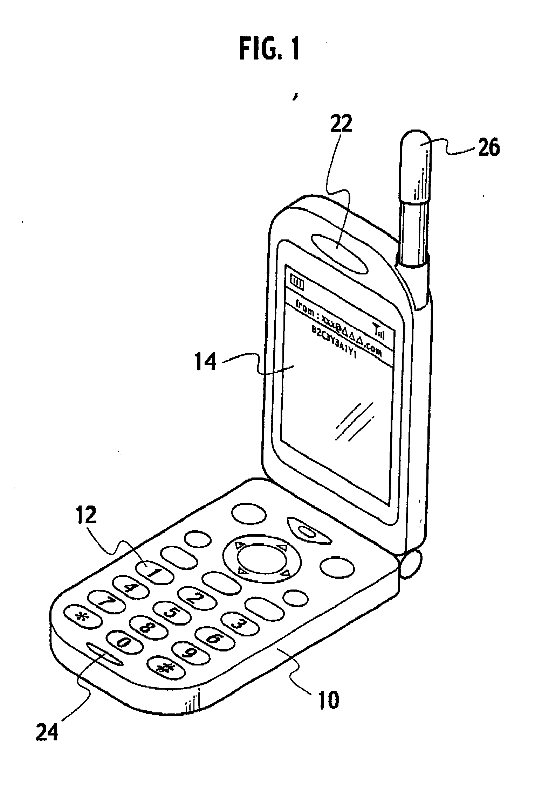

With reference to FIGS.1 to 14B, an exemplary embodiment of the present invention will be described below.

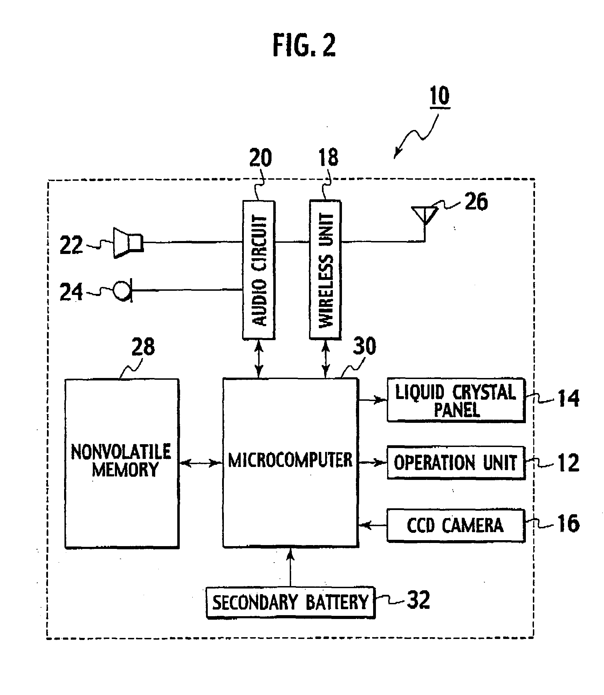

As shown in FIGS.1 and 2, a portable telephone 10 comprises an operation unit 12, a liquid crystal panel 14, a CCD camera 16. a wireless unit 18, an audio circuit 20, a speaker 22, a microphone 24, a transmitting and receiving antenna 26, a nonvolatile memory 28, a microcomputer 30 and a secondary battery 32.

The wireless unit 18 is controlled by the microcomputer 30 and transmits or receives a radio wave to or from a base station through the transmitting and receiving antenna 26. The audio circuit 20 outputs to the speaker 22 through the microcomputer 30 a receiving signal output from the wireless unit 18 and outputs to the wireless unit 18 through the microcomputer 30 an audio signal output from the microphone 24 as a transmitting signal.

The speaker 22 converts into a sound the receiving signal output from the audio circuit 20 and outputs the sound to the outside of the portable telephone 10. The microphone 24 converts into the transmitting signal a sound produced by an operator and outputs the transmitting signal to the audio circuit 20. The CCD camera 16 captures an object on the portable telephone 10. The microcomputer 30 converts the captured object into image data and stores the image data in the nonvolatile memory 28.

The liquid crystal panel 14 displays characters input through the operation unit 12, images based on objects captured by the CCD camera 16 or a mail document and/or an image received through the transmitting and receiving antenna 26 thereon.

The secondary battery 32 supplies an electronic power into each circuit. The microcomputer 30 consists of a CPU (central processing unit), a ROM (read only memory) and a RAM (random access memory) and executes an incoming and outgoing calls process, an electronic mail creating process, an electronic mail sending and receiving process, an Internet process and the like. The microcomputer 30 sends and receives an electronic mail or Internet-based data by using the wireless unit 18 and the transmitting and receiving antenna 26.

The nonvolatile memory 28 stores electronic mail data input through the operation unit 12, image data based on the objects captured by the CCD camera 16, electronic mail data received through the transmitting and receiving antenna 26 and various programs. Especially, the nonvolatile memory 28 stores an electronic mail sending and receiving program and one or more encryption and decryption tables. Each encryption and decryption table is sent from a server 100 through an Internet. The nonvolatile memory 28 functions as an electronic mail storing means for storing an electronic mail. The nonvolatile memory 28 also functions as an encryption table storing means and a decryption table storing means for storing the encryption and decryption tables.

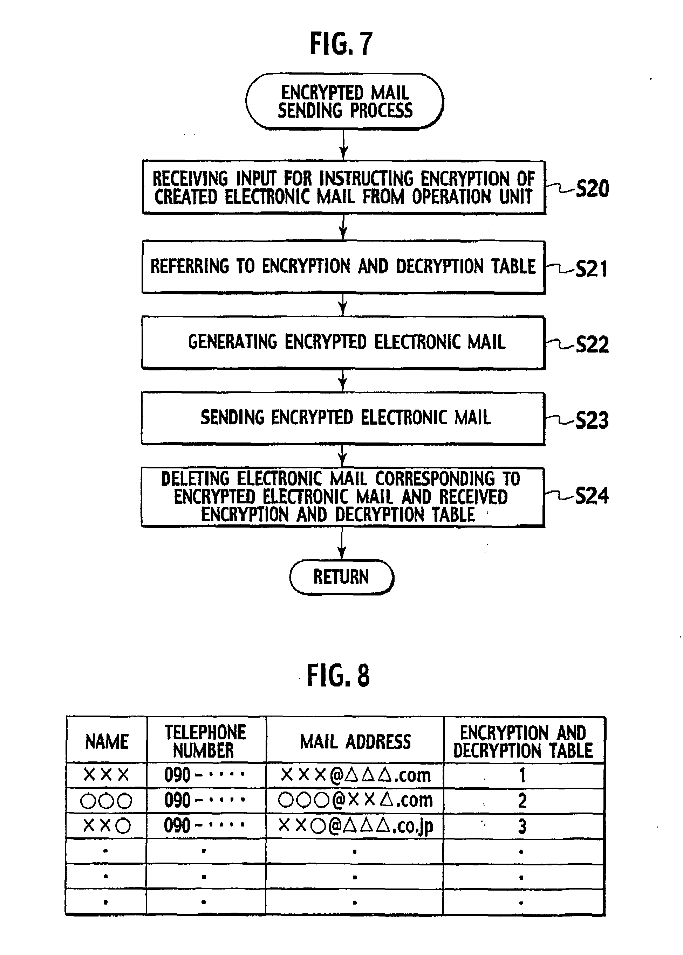

The server 100 stores an address book and the plurality of encryption and decryption tables therein. Two or more owners of the portable telephones 10 who plan to exchange an electronic mail each other previously share one encryption and decryption table. Each encryption and decryption table is associated with two or more mail addresses that two or more owners who plan to exchange an electronic mail each other have. More specifically, in the address book, each encryption and decryption table number is associated with the two ore more mail address. The address book is periodically updated in the server 100. As shown in FIG. 8, names, telephone numbers and mail addresses and encryption and decryption table numbers are stored in the address book and are associated with one another.

In a case where each owner will newly subscribe to a encryption and decryption table, he/she takes the following procedures: (1) he/she accesses the server 100 through the Internet and opens a subscription page in a browser; (2) he/she inputs a password corresponding to the desired encryption and decryption table on the subscription page by using the operation unit 12; (3) he/she presses a subscription button appearing on the subscription page by using the operation unit 12 to newly subscribe to the desired encryption and decryption table, if the input password is correct.

Here, it is noted that one or more encryption and decryption tables may correspond to one mail address. Although the exemplary embodiment will be described on the assumption that the encryption table has the same contents as the decryption table has, the contents of the encryption table may differ from those of the decryption table only if an encrypted electronic mail generated by using a corresponding encryption table can be decrypted. Further, although the exemplary embodiment will be described on the assumption that each encryption and decryptian table is sent from the server 100 through the Internet, each encryption and decryption table may be previously stored in the portable telephone 10. Furthermore, although the exemplary embodiment will be described on the assumption that the address book is stored in the server 100 and downloaded just before an electronic mail is encrypted, the address book may be periodically and simultaneously downloaded from the server 100 to each portable telephone 10. In this case, when a new address book is automatically downloaded from the server 100, the new address book overwrites the previously downloaded address book.

The microcomputer 30 encrypts an electronic mail created by an owner of the portable telephone 10 to generate an encrypted electronic mail. At this time, the microcomputer 30 generates the encrypted electronic mail with reference to the encryption and decryption table associated with source and destination mail addresses of the created electronic mail. Then, the microcomputer 30 sends the generated encrypted electronic mail.

The nonvolatile memory 28 functions as a password storing means and previously stores a password therein. The password can be registered and changed by only the owner. The microcomputer 30 requires an input of the password to a user when receiving the encrypted electronic mail through the transmitting and receiving antenna 26. If the input password coincides with the previously stored password, the microcomputer 30 decryptes the received encrypted electronic mail with reference to the encryption and decryption table corresponding to source and destination mail addresses of the received encrypted electronic mail to generate a decrypted electronic mail. Then, the microcomputer 30 stores the decrypted electronic mail in the RAM which functions as a decrypted electronic mail temporarily storing means.

The microcomputer 30 displays the decrypted electronic mail on the liquid crystal panel 14. Also, the microcomputer 30 deletes the stored decrypted electronic mail from the RAM when receiving an instruction for finishing the display.

The microcomputer 30 functions as the following means: a receiving means for receiving an encrypted electronic mail by reading and executing an electronic mail sending and receiving program stored in the nonvolatile memory 28; a checking means for checking whether or not a password input from the operation unit 12 coincides with the password registered in the nonvolatile memory 28: a decrypted electronic mail generating means for decrypting the received encrypted electronic mail to generate a decrypted electronic mail with reference to a decryption table if the password input from the operation unit 12 coincides with the password registered in the nonvolatile memory 28; a display control means for displaying the decrypted electronic mail stored in the RAM on the liquid crystal panel 14; and a decrypted electronic mail deleting means for deleting the decrypted electronic mail stored in the RAM according to the reception of the instruction for finishing the display of the decrypted electronic mail from the operation unit 12.

The microcomputer 30 further functions as the following means: an encrypted electronic mail generating means for encrypting an electronic mail to generate an encrypted electronic mail with reference to an encryption table stored in the nonvolatile memory 28 by reading and executing the electronic mail sending and receiving program stored in the nonvolatile memory 28; an encrypted electronic mail sending means for sending the encrypted electronic mail; and a deleting means for deleting the electronic mail corresponding to the encrypted electronic mail from the nonvolatile memory 28 after sending the encrypted electronic mail.

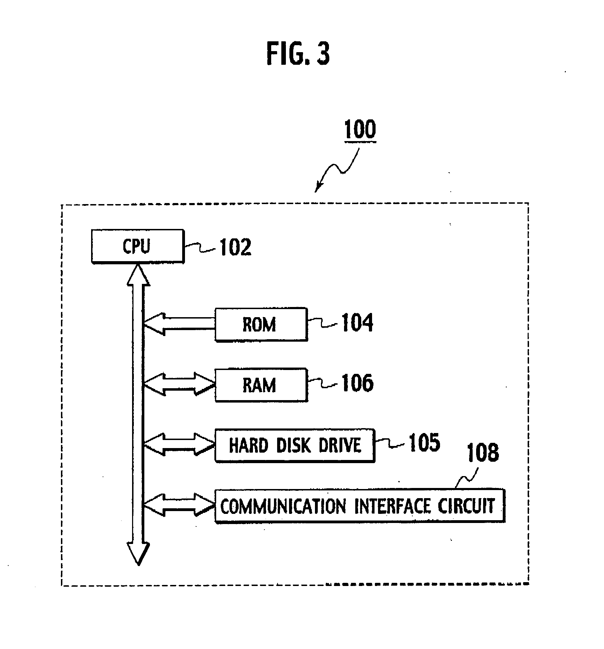

As shown in FIG.3, the server 100 comprises a CPU 102, a ROM 104, a RAM 106, a communication interface circuit 108 in communication with the portable telephone 10 through the Internet, and a hard disk drive 105.

The hard disk drive 105 stores the address book and the plurality of encyrption and decryption tables therein. Before the portable telephone 10 encrypts the created electronic mail, the portable telephone 10 transmits the source and destination addresses written on the created electronic mail to the server 100. If the CPU 102 receives the source and destination addresses from the portable telephone 10, the CPU 102 loads the address book from the hard disk drive 105 to the RAM 105, and detects an encryption and decryption table number with which the received source and destination addresses are associated, with reference to the loaded address book. If the CPU 102 detects the encryption and decryption table number, the CPU 102 loads an encryption and decryption table to which the detected encryption and cecryption table number is assigned from the hard disk drive 105 to the RAM 106. Then, the CPU 102 transmitts the loaded encryption and decryption table to the portable telephone 10.

On the other hand, in a case where the address book is stored in the nonvolatile memory 28, before the portable telephone 10 encrypts the created electronic mail, the portable telephone 10 first loads the address book from the nonvolatile memory 28 to the RAM, and detects an encryption and decryption table number with which the source and destination addresses written on the created electronic mail are associated, with reference to the loaded address book. Then, the portable telephone 10 transmits the detected encryption and decryption table number to the server 100. If the server 100 receives the detected encryption and decryption table number from the portable telephone 10, the CPU 102 loads an encryption and decryption table to which the received encryption and decryption table number is assigned from the hard disk drive 105 to the RAM 106. Then, the CPU 102 transmits the loaded encryption and decryption table to the portable telephone 10.

The address book may be transmitted from the server 100 to the portable telephone 10 when the portable telephone 10 encrypts the created electronic mail. In this case, the portable telephone 10 transmits a request signal to the server 100. If the server 100 receives the request signal, the CPU 102 transmits the address book (table selection information) to the portable telephone 10. If the portable telephone 10 receives the address book from the server 100, the portable telephone 10 detects an encryption and decryption table number to which the source and destination addresses are associated from the received address book. If the portable telephone 10 detects the encryption and decryption table number, the portable telephone 10 transmits the detected encryption and decryption table number (selection information) to the server 100. If the server 100 receives the detected encryption and decryption table number, the CPU 102 loads an encryption and decryption table to which the received encryption and decryption table number is assigned from the hard disk drive 105 to the RAM 106. Then, the CPU 102 transmits the loaded encryption and decryption table to the portable telephone 10.

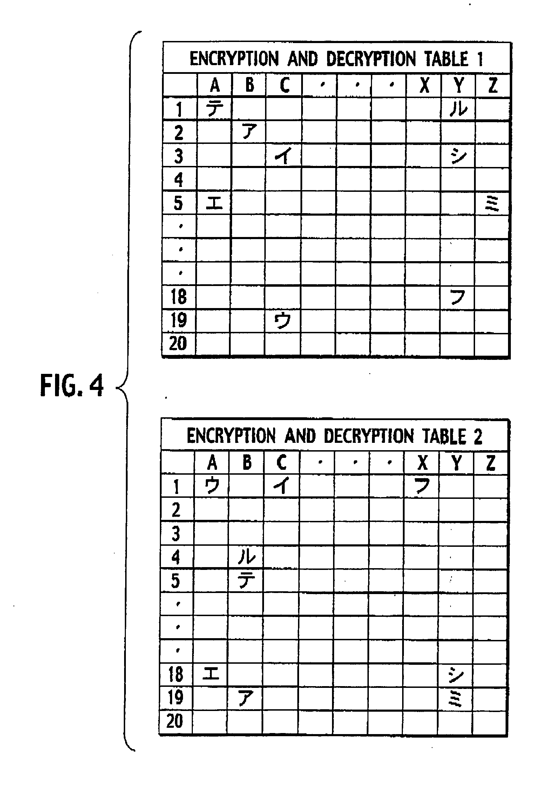

As shown in FIG.4, the encryption and decryption table of Katakana version is formed by a plurality of cells each which is identified by a combination of one of alphabets A to Z and one of numerals 1 to 20. Katakana " 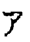 (A)" to " 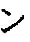 (N)" used in Japanese writing are stored in a part of the cells. For example, in a case where the poratable telephone 10 selects an encryption and decryption table 1, if Katakana " 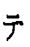 (TE)" is written in a main body of an electronic mail, the microcomputer 30 encrypts Katakana " 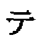 (TE)" into "Al" with reference to the encryption and decryption table 1 because Katakana " 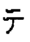 (TE)" is identified by a combination Al in the encryption and decryption table 1. In contrast, if "A1" is written in a main body of an encrypted electronic mail, the microcomputer 30 decrypts "A1" into Katakana " 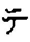 (TE)" with reference to the encryption and decryption table 1.

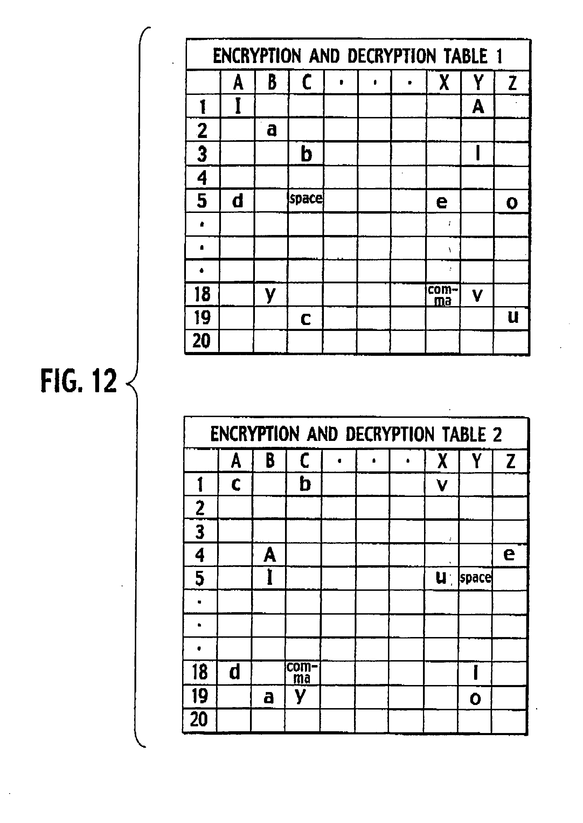

Similarly, as shown in FIG.12, the encryption and decryption table of Alphabet version is formed by a plurality of cells each which is identified by a combination of one of alphabets A to Z and one of numerals 1 to 20. Alphabet "A" to "Z" and "a" to "z", a space, a comma, a colon, a question mark, an exclamation mark and the like used in English writing are stored in a part of the cells. For example, in a case where the portable telephone 10 selects an encryption and decryption table 1, if Alphabet "I" is written in a main body of an electronic mail, the microcomputer 30 encrypts Alphabet "I" into "A1" with reference to the encryption and decryption table 1 because Alphabet "I" is identified by a combination Al in the encryption and decryption table 1. In contrast, if "A1" is written in a main body of an encrypted electronic mail, the microcomputer 30 decrypts "A1" into Alphabet "I" with reference to the encryption and decryption table 1.

Although the exemplary embodiment will be described on the assumption that the electronic mail sending and receiving program is previously stored (pre-installed) in the portable telephone 10, it may be stored in a memory device (e.g. hard disk drive 105) of the server 100 and downloaded into the portable telephone 10 at a time of sending or receiving an encrypted electronic mail.

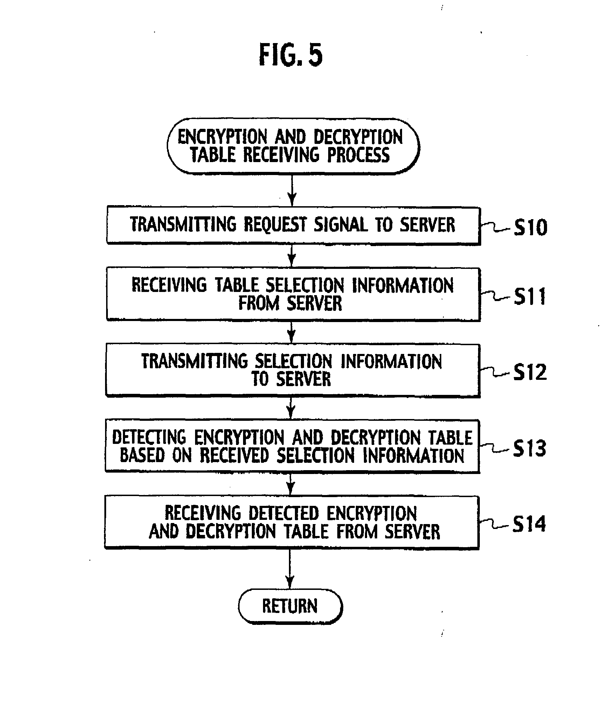

Next, an encryption and decryption table receiving process executed in the portable telephone 10 will be described with reference to FIG. 5. This process is carried out in the case where the address book is transmitted from the server 100 to the portable telephone 10 just before the portable telephone 10 encrypts the created electronic mail. Also, this process is carried out after the main body of the electronic mail is created and the source and destination addresses are written on the created electronic mail. The created electronic mail is stored in the nonvolatile memory 28.

In step S10, the microcomputer 30 transmits the request signal to the server 100. For example, the microcomputer 30 accesses to an encryption and decryption table delivery site (e.g. a predetermined browser in the server 100) and transmits the request signal according to an operation by the operation unit 12.

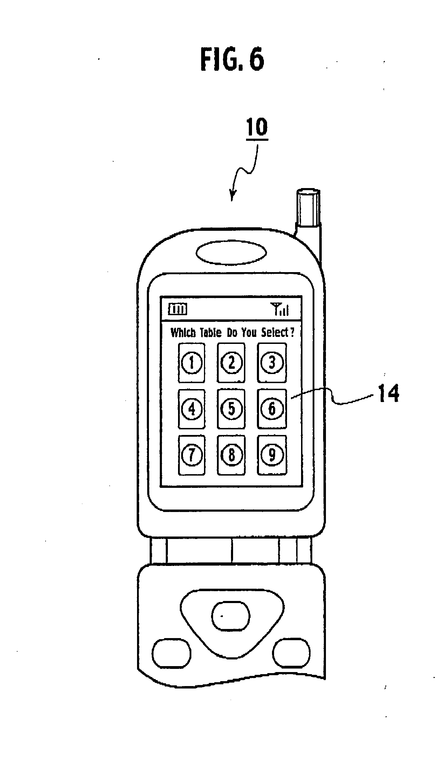

In step S11, the microcomputer 30 receives the table selection information tramsitted from the server 100 on the basis of the request signal. In a case where there are two or more encryption and decryption table numbers with which the source and destination addresses of the created electronic mail are associated, card images to which two or more numerals (e.g. 1 to 9) are assigned and a message "which table do you select?" are displayed on the liquid crystal display 14 (see FIG.6). The card images are linked to the server 100 by hyperlinks. If the owner selects any one of the card images, the microcomputer 30 transmits the selection information to the server 100.

In step S12, the microcomputer 30 detects an encryption and decryption table number with which the source and destination addresses are associated, with reference to the talbe selection information, and then transmits the selection information to the server 100. In step S13, the server 100 detects an encryption and decryption table corresponding to the selection information from the hard disk drive 105.

In step S14, the server 100 transmits the detected encryption and decryption talbe to the portable telephone 10. If the microcomputer 30 receives the detected encryption and decryption table, the microcomputer 30 stores it in the nonvolatile memory 28 and finishes this process. The portable telephone 10 can receive a plurality of encryption and decryption tables by repeating the encryption and decryption table receiving process. It is noted the portable telephone 10 may receive the plurality of encryption and decryption tables at a time.

Next, an encrypted mail sending process executed in the portable telephone 10 will be described with reference to FIG.7.

In step S20, the microcomputer 30 receives an input for instructing an encryption of the created electronic mail from the operation unit 12. In step S21, the microcomputer 30 refers to the received encryption and decryption table corresponding to the source and destination addresses of the created electronic mail.

In step S22, the microcomputer 30 generates an encrypted electronic mail on the basis of the encryption and decryption table to which the microcomputer 30 refers. In step S22, the microcomputer 30 functions as the encrypted electronic mail generating means for encrypting an electronic mail to generate an encrypted electronic mail on the basis of an encryption table.

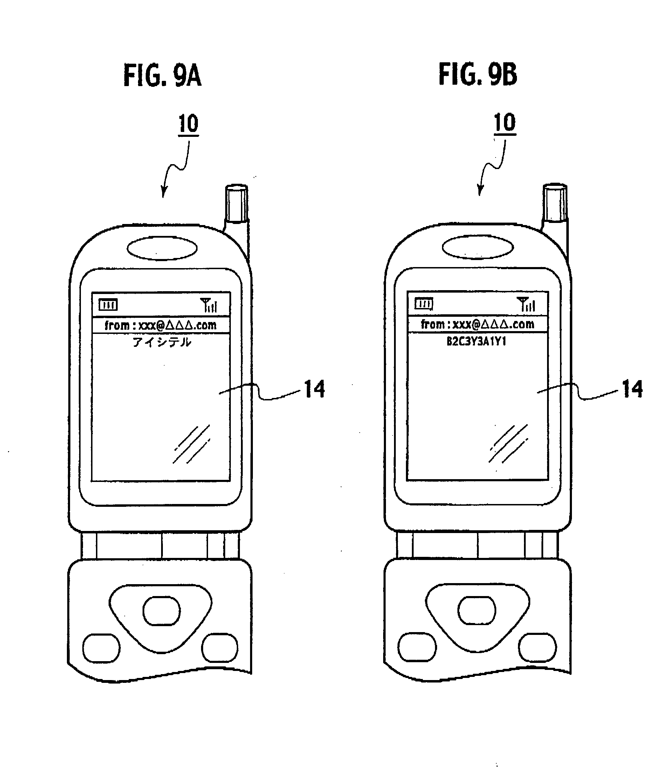

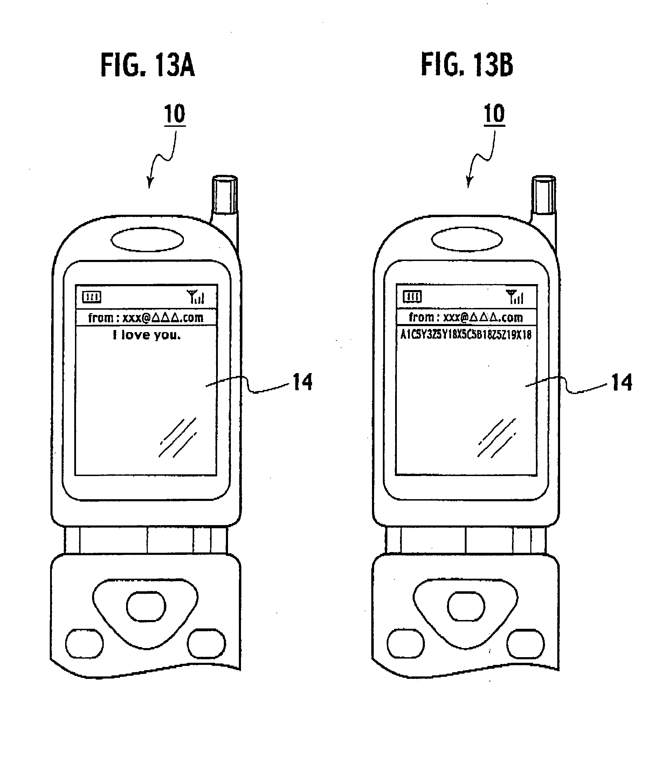

For example, when the microcomputer 30 receives the input for instructing an encryption of the created electronic mail shown in FIG.9A (or FIG.13A), the microcomputer 30 executes the processes of steps S21 and S22 to generate the encrypted electronic mail shown in FIG. 9B (or FIG.13B).

In step S23, the microcomputer 30 sends the encrypted electronic mail to the destination address. In step S23, the microcomputer 30 functions as the encrypted mail sending means for sending an encrypted electronic mail.

In step S24, the microcomputer 30 deletes the electronic mail corresponding to the encrypted electronic mail and the received encryption and decryption table from the nonvolatile memory 28 and finishes this process. In step S24, the microcomputer 30 functions as the deleting manes for deleting the encrypted electronic mail from the nonvolatile memory 28 after sending the encrypted electronic mail.

It is noted that the electronic mail corresponding to the encrypted electronic mail maybe stored in the nonvolatile memory 28 without being deleted. In a case where the microcomputer 30 continues to store the encrypted electronic mail in the nonvolatile memory 28, only an owner of the portable telephone 10 checks the contents of the sent electronic mail because it is encrypted. On the other hand, in a case where the electronic mail corresponding to the encrypted electronic mail is deleted, this certainly prevents a third party from reading the contents of the sent electronic mail.

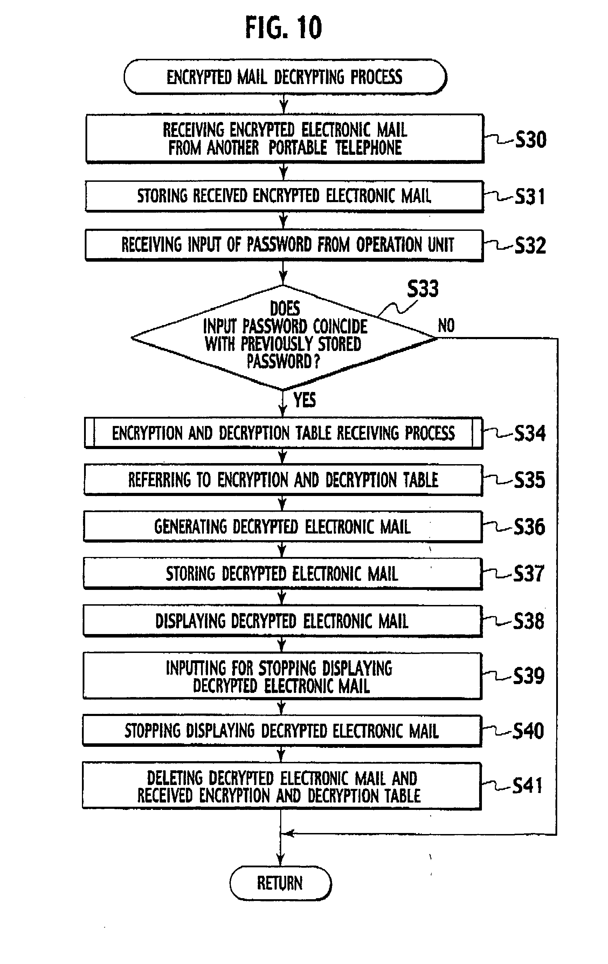

Next, an encrypted mail decrypting process executed in the portable telephone 10 will be described with reference to FIG.10.

In step S30, the microcomputer 30 receives an encrypted electronic mail from another portable telephone 10. In step S30, the microcomputer 30 functions as an encrypted electronic mail receiving means for receiving an encrypted electronic mail.

In step S31, the microcomputer 30 stores the received encrypted electronic mail in the nonvolatile memory 28. In step S31, the nonvolatile memory 28 functions as an encrypted electronic mail storing means for storing a received encrypted electronic mail.

In step S32, the microcomputer 30 receives an input of a password from the operation unit 12 which functions as a password inputting means. In step S33, the microcomputer 30 checks whether or not the input password coincides with a password previously stored in the nonvolatile memory 28. If the input password coincides with the password previously stored in the nonvolatile memory 28, the process proceeds to step S34. If the input password does not coincide with the password previously stored in the nonvolatile memory 28, the process is finished. In step S33, the microcomputer 30 functions as the checking means for checking whether or not a password input from the operation unit 12 coincides with a password previously stored in the nonvolatile memory 28.

In step S34, the microcomputer 30 executes the encryption and decryption table receiving process shown in FIG. 5. In step S35, the microcomputer 30 refers to the received encryption and decryption table corresponding to source and destination addresses written on the received encrypted electronic mail. In step S36, the microcomputer 30 generates a decrypted electronic mail with reference to the received encryption and decryption table. In steps S35 and S36, the microcomputer 30 functions as the decrypted electric mail generating means for decrypting an encrypted electronic mail stored in the nonvolatile memory 28 to generate a decrypted electronic mail with reference to a decryption table.

In step S37, the microcomputer 30 stores the generated decrypted electronic mail in the RAM which functions as the decrypted electronic mail temporarily storing means.

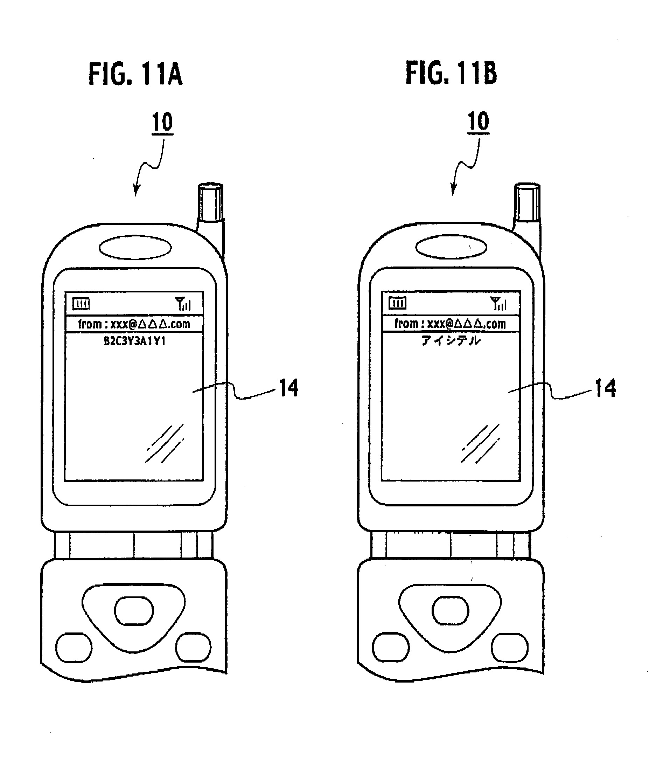

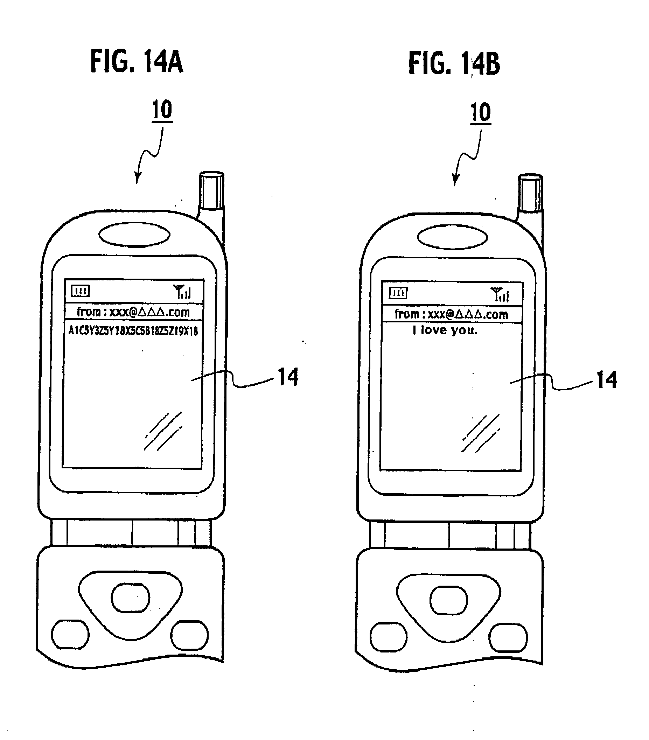

In step S38, the microcomputer 30 displays the decrypted electronic mail stored in the RAM on the liquid crystal panel 14. In step S38, the microcomputer 30 functions as the display control means for displaying a decrypted electronic mail on the liquid crystal panel 14. For example, when the portable telephone 10 receives an encrypted electronic mail (see FIG.11A or 14A), the microcomputer 30 executes steps S31 to S37 and then displays a decrypted electronic mail on the liquid crystal panel 14 in step S38 (see FIG.11B or 14B).

In step S39, the microcomputer 30 receives an input for stopping displaying the decrypted electronic mail on the liquid crystal panel 14 from the operation unit 12. In step S40, the microcomputer 30 stops displaying the decrypted electronic mail on the liquid crystal panel 14.

In step S41, the microcomputer 30 deletes the decrypted electronic mail and the received encryption and decryption table from the RAM and the nonvolatile memory 28 and then finishes this process. In step S41, the microcomputer 30 functions as the decrypted electronic mail deleting means for deleting a decrypted electronic mail stored in the RAM according to a reception of input for stopping displaying the decrypted electronic mail. The microcomputer 30 may delete the received encrypted electronic mail corresponding to the decrypted electronic mail from the nonvolatile memory 28 in step S41.

Next, advantageous features of the portable telephone 10 and the program for sending and receiving an electronic mail according to the poresent invention will be described.

The received encrypted electronic mail is decrypted with reference to the received encryption and decryption talbe only when a password input from the operation unit 12 coincides with a password previously stored in the nonvolatile memory 28. This prevents a third party who does not know the password of the owner of the portable telephone 10 from reading the decrypted electronic mail.

The received encrypted electronic mail is correctly decrypted only when a receiver and a sender shares the same encryption and decryption table. This prevents a third party who does not share an encryption and decryption table used by a sender to encrypt a created electronic mail from reading the decrypted electronic mail. Also, a receiver can easily know that the encrypted electronic mail is sent from a third party who does not share an encryption and decryption talbe with the receiver when the received encrypted electronic mail is not correctly decrypted. This allows a receiver to easily check whether or not a received electronic mail is sent from an authorized person without adding a new specifying field to the electronic mail.

Even if a sender sends a created electronic mail to a wrong person, the wrong person can not know the contents of the electronic mail because he/she does not share an encryption and decryption talbe with the sender.

If lovers share one encryption and decryption table, the strength of their intimacy increases.

The portable telephone 10 encrypts a created electronic mail with reference to an encryption and decryption table which is received from the server 100 to generate an encrypted electronic mail and then sends the generated encrypted electronic mail. The generated encrypted electronic mail is not decrypted without using the same encryption and decryption table. This prevents a third party who does not share the same encryption and decryption table from reading the decrypted electronic mail.

The portable telephone 10 deletes the received encryption and decryption table after sending an encrypted electronic mail or displaying a decrypted electronic mail. This reduces a possibility that a third party gets the received encryption and decryption table.

Even if a sender sends an encrypted electronic mail to a wrong person who has the same encryption and decryption program as the sender has, the wrong person can not decrypt the received encrypted electronic mail because only two or more owners who plan to exchange an electronic mail share one encryption and decryption table. This reduces a possibility that the wrong person decrypts the received encrypted electronic mail.

If the portable telephone 10 receives a non-encrypted electronic mail, the portable telephone 10 may allow a user to read the non-encrypted electronic mail without inputting a password. This achieves a good balance between secrecy and convenience.

Next, modified embodiments of the present invention will be described.

In a case where the address book is periodically and simultaneously downloaded from the server 100 to each portable telephone 10, an encrypted mail sending process and an ecrypted mail decrypting process will be described.

In the encrypted mail sending process, the microcomputer 30 first receives an input for instructing an encryption of a created electronic mail from the operation unit 12. The microcomputer 30 second loads the address book from the volatile memory 28 to the RAM. The microcomputer 30 third detects an encryption and decryption table number with which the source and destination addresses are associated, with reference to the address book, and then transmits the detected encryption and decryption table number to the server 100. The sever 100 detects an encryption and decryption table corresponding to the detected encryption and decryption table number from the hard disk drive 105. The server 100 next transmits the detected encryption and decryption table to the portable telephone 10. The microcomputer 30 finally encrypts the created electronic mail with reference to the received encryption and decryption table and then sends the encrypted electronic mail.

In the encrypted mail decrypting process, the microcomputer 30 first receives an input of a password from the operation unit 12. If the password input from the operation unit 12 coincides with a password previously stored in the nonvolatile memory 28, the microcomputer 30 loads the address book from the volatile memory 28 to the RAM. The microcomputer 30 next detects an encryption and decryption table number with which the source and destination addresses are associated, with reference to the address book, and then transmits the detected encryption and decryption table number to the server 100. The sever 100 detects an encryption and decryption table corresponding to the detected encryption and decryption table number from the hard disk drive 105. The server 100 next transmits the detected encryption and decryption table to the portable telephone 10. The microcomputer 30 finally decrypts the encrypted electronic mail with reference to the received encryption and decryption table and then displays the decrypted electronic mail on the liquid crystal panel 14.

In a case where each address is associated with only one encryption and decryption table, the microcomputer 30 may detect an encryption and decryption table number with which the source or destination address is associated, with reference to the address book (talbe selection information) in step S12 of the encryption and decryption table receiving process.

The address book may include only one encryption and decryption table therein. The nonvolatile memory 28 may be a removable memory.

The portable telephone 10 may store a plurality of passwords therein. In this case, the portable telephone 10 requires a user to input one password according to a sender name, a receiver name, a sending time, a receiving time and/or a current time. For example, the user can use a one time password generator to input one time password (OTP) into the portable telephone 10. In this case, the one time password generator has been previously synchronized with the portable telephone 10.

The present exemplary embodiment is to be considered in all respects as illustrative and not restrictive. The present invention may be therefore embodied in other specific forms without departing from the essential characteristics thereof.

## Claims

1. A portable telephone (10) comprising:
an encrypted electronic mail receiving means (30) for receiving an encrypted electronic mail;
an encrypted electronic mail storing means (28) for storing the received encrypted electronic mail;
a password storing means (28) for storing a password;
a password inputting means (12) for inputting a password;
a ckecing means (30) for checking whether or not a password input from the password inputting means (12) coincides with the password stored in the password storing means (28);
a decryption table storing means (28) for storing a decryption table;
a decrypted electronic mail generating means (30) for decrypting the received encrypted electronic mail stored in the encrypted electronic mail storing means (28), with reference to the decryption table stored in the decryption table storing means (28), to generate a decrypted electronic mail, if the password input from the password inputting means (12) coincides with the password stored in the password storing means (28);
a decrypted electronic mail temporarily storing means (30) for temporarily storing the decrypted electronic mail generated by the decrypted electronic mail generating means (30);
a display means (14) for displaying the decrypted electronic mail thereon;
a display conrol means (30) for controlling the display of the decrypted electronic mail temporarily stored in the decrypted electronic mail temporarily storing means (30) on the display means (14); and
a decrypted electronic mail deleting means (30) for deleting the decrypted electronic mail temporarily stored in the decrypted electronic mail temporarily storing means (30) according to an order for stopping displaying the decrypted electronic mail on the display means (14).

2. A portable telephone (10) comprising:
an electronic mail storing means (28) for storing a created electronic mail;
an encryption table storing means (28) for storing an encryption table;
an encrypted electronic mail generating means (30) for encrypting the electronic mail stored in the electronic mail storing means (28) with reference to the encryption table stored in the encryption table storing means (28), to generate an encrypted electronic mail;
an encrypted electronic mail sending means (30) for sending the encrypted electronic mail generated by the encrypted electronic mail generating means (30); and
a deleting means (30) for deleting the electronic mail corresponding to the encrypted electronic mail from the electronic mail storing means (28) after the encrypted electronic mail sendingmeans (30) sends the encypted electronic mail.

3. The portable telephone (10) according to claim 2, further comprising an encryption table receiving means (30) for receiving the encryption table from a server (100),
wherein
the encryption table storing means (28) stores table selection information,
the encrypted electronic mail generating means (30) extracts selection information associated with at least one of source and destination addresses written on the created electronic mail from the table selection information stored in the encryption table storing means (28),
the encrypted electronic mail sending means (30) sends to the server (100) the selection information generated by the encrypted electronic mail generating means (30),
the encryption table receiving means (30) receives from the server (100) the encryption table associated with the selection information sent by the encrypted electronic mail sending means (30), and stores the encryption talbe in the encryption table storing means (28), and
the encypted electronic mail generating means (30) encrypts the electronic mail stored in the electronic mail storing means (30) with reference to the encryption table stored in the encryption table storing means (28), to generate an encrypted electronic mail.

4. A portable telephone usable medium (28) having a portable telephone readable program code embodied therein for sending and receiving an electronic mail, the portable telephone readable program code comprising:
a first portable telephone readable program code for causing the portable telephone (10) to receive an encrypted electronic mail;
a second portable telephone readable program code for causing the portable telephone (10) to store the received encrypted electronic mail;
a third portable telephone readable program code for causing the portable telephone (10) to store a password;
a fourth portable telephone readable program code for causing the portable telephone (10) to input a password;
a fifth portable telephone readable program code for causing the portable telephone (10) to check whether or not a password input by the portable telephone (10) coincides with the password stored in the portable telephone (10);
a sixth portable telephone readable program code for causing the portable telephone (10) to store a decryption table;
a seventh portable telephone readable program code for causing the portable telephone (10) to decrypt the received encrypted electronic mail with reference to the decryption table, to generate a decrypted electronic mail, if the password input by the portable telephone (10) coincides with the password stored in the portable telephone (10);
an eighth portable telephone readable program code for causing the portable telephone (10) to temporarily store the decrypted electronic mail;
a ninth portable telephone readable program code for causing the portable telephone (10) to display the decrypted electronic mail;
a tenth portable telephone readable program code for causing the portable telephone (10) to control the display of the decrypted electronic mail; and
an eleventh portable telephone readable program code for causing the portable telephone (10) to delete the decrypted electronic mail according to an order for stopping displaying the decrypted electronic mail.

5. A portable telephone usable medium (28) having a portable telephone readable program code embodied therein for sending and receiving an electronic mail, the portable telephone readable program code comprising:
a first portable telephone readable program code for causing the portable telephone (10) to store a created electronic mail;
a second portable telephone readable program code for causing the portable telephone (10) to store an encryption table;
a third portable telephone readable program code for causing the portable telephone (10) to encrypt the electronic mail with reference to the encryption table, to generate an encrypted electronic mail;
a fourth portable telephone readable program code for causing the portable telephone (10) to send the encrypted electronic mail; and
a fifth portable telephone readable program code for causing the portable telephone (10) to delete the electronic mail corresponding to the encrypted electronic mail after sending the encypted electronic mail.

6. The portable telephone readable program code according to claim 5, further comprising:
a sixth portable telephone readable program code for causing the portable telephone (10) to store table selection information,
a seventh portable telephone readable program code for causing the portable telephone (10) to extract selection information associated with at least one of source and destination addresses written on the created electronic mail from the table selection information,
an eighth portable telephone readable program code for causing the portable telephone (10) to send the extracted selection information to a server (100), and
a ninth portable telephone readable program code for causing the portable telephone (10) to receive from the server (100) the encryption table associated with the extracted selection information, and store the encryption talbe.
